# EUROPÄISCHE PATENTSCHRIFT

(11) **EP 0 950 346 B1**
(45) Veröffentlichungstag und Bekanntmachung des Hinweises auf die Patenterteilung: **04.09.2002**
(21) Anmeldenummer: 99104352.2
(22) Anmeldetag: 04.03.1999
(51) Int. Cl.: A01D 41/12

(54) **Mähdrescher**
Combine
Moissonneuse-batteuse

(30) Priorität: 13.04.1998 US 59494
(43) Veröffentlichungstag der Anmeldung: 20.10.1999
(73) Patentinhaber: DEERE & COMPANY, Moline, Illinois 61265-8098 (US)
(72) Erfinder: Wyffels, Michael Keith, Geneseo, Illinois 61254 (US); Harden, Philip Alan, Colona, Illinois 61241 (US)
(74) Vertreter: Magin, Ludwig Bernhard

(56) Entgegenhaltungen:
- EP-A- 0 091 303
- EP-A- 0 631 906
- DE-A- 2 030 767
- US-A- 3 093 946
- DATABASE WPI Section PQ, Week 8551 Derwent Publications Ltd., London, GB; Class P12, AN 85-322219 XP002109938 & SU 1 160 972 A (LENGD AGRIC INST), 15. Juni 1985 (1985-06-15)

## Beschreibung

Die Erfindung betrifft einen Mähdrescher, mit einem Motor, einer an den Motor angeschlossenen Motorsteuerung zur Steuerung der Leistung des Motors, einer Vortriebseinrichtung, sowie wenigstens einer Verarbeitungseinrichtung für Erntegut, wobei die Vortriebseinrichtung und die Verarbeitungseinrichtung durch den Motor antreibbar und separat abschaltbar sind.

In der US-A-4 522 533 ist ein Mähdrescher gattungsgemäßer Art offenbart, mit einer Leistungssteigerungsanordnung, die die Motorleistung steigert, wenn der Betrieb der Entladeförderschnecke detektiert wird.

In der US-A-5 488 817 ist ein Mähdrescher beschrieben, bei dem die Motorgeschwindigkeit nach dem Einschalten der Drescheinrichtung kurzfristig heruntergefahren wird, um die Belastung der Treibriemen beim Einschaltvorgang zu verringern, und dann wieder auf den ursprünglichen Wert hochgefahren wird.

In der DE-A-2 037 767 wird vorgeschlagen, bei einem Mähdrescher die Leistung des Verbrennungsmotors zu messen und zur Regelung zu verwenden. Der gemessene Wert dient zur Regelung der Fahrgeschwindigkeit und/oder der Gutzufuhr. Dadurch soll erreicht werden, dass ein Drehzahlabfall der Mähdreschorgane bei Schwankungen in der Leistungsanforderung vermieden wird. Die Motorleistung wird durch die Regelung somit konstant gehalten.

In der EP-A-0 091 303 wird ein Steuersystem für den Motor und das Getriebe eines Mähdreschers beschrieben. Die Drehzahl des Motors wird überwacht. Bei einem Drehzahlabfall des Motors wird die Vortriebsgeschwindigkeit reduziert und mehr Betriebsstoff zugeführt.

Mähdrescher sind große landwirtschaftliche Maschinen, die zum Ernten, Dreschen, Trennen und Reinigen landwirtschaftlichen Gutes verwendet werden. Mähdrescher sind mit einem Korntank ausgestattet, um sauberes Korn temporär zu speichern, bevor es durch einen Entladeschneckenförderer auf einen Anhänger oder Lastwagen entladen wird. Diese Maschinen sind gewöhnlich mit einem Eigenantrieb versehen und können mit zusätzlichen Erntegut-Verarbeitungseinrichtungen ausgestattet sein, wie Strohhäckslern und Spreuverteilern.

Die Steuerung und Handhabung der Reste, die der Mähdrescher auf dem Boden ablegt, wird immer wichtiger. Dieses erfordert oft feinere und kürzere Häcksellängen, die mehr Strohhäckslerleistung erfordern, und somit mehr Motorleistung. Außerdem erfordert der Wunsch des Landwirts nach gesteigerter Maschinenproduktivität auch mehr Motorleistung, von der ein hoher Anteil beim Vortrieb der Maschine und beim Antreiben der Ernteausrüstung verbraucht wird.

Wenn diese Systeme nicht in Benutzung sind und nicht ihre normale Leistung verbrauchen, ist diese Leistung für andere Funktionen der Maschine verfügbar, insbesondere zum Trennen. Eine derartige Situation könnte die Kapazität des Antriebs der Trenneinrichtung übersteigen und eine Überlastung der Trenneinrichtung bedingen. Zur Zeit löst ein Mähdrescher-Konstrukteur dieses potentielle Problem dadurch, daß er die Antriebe der Trenneinrichtung so gestaltet, daß sie die volle Motorleistung in allen Fällen bewältigen können, z.B. wenn der Strohhäcksler nicht benutzt wird oder die Maschine mit nicht betriebener Ernteausrüstung still steht, wie beim Herausfördern verstopfenden Ernteguts, das sich in der Trenneinrichtung gefangen hat. Die Trenneinrichtung verbraucht im Normalbetrieb typischerweise etwa ein Drittel der gesamten Motorleistung. Die Dimensionierung für diesen Höchstlastfall vergrößert anbetrachts heutiger höherer Motorleistungen das Gewicht und die Kosten der Maschine.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, die maximale Motorleistung zu reduzieren, wenn die Vortriebseinrichtung und/oder die Verarbeitungseinrichtung nicht im Betrieb, also abgeschaltet sind. Auf diese Weise wird die Motorleistung vermindert, wenn unterschiedliche Systeme des Mähdreschers deaktiviert sind. Andererseits wird die Leistung des Motors vergrößert, wenn diese Systeme des Mähdreschers reaktiviert werden. Dabei wird eine elektronische Motorsteuerung verwendet, um den Betrieb des Motors zu überwachen und zu steuern. Sensoren stellen Eingaben für die elektronische Motorsteuerung bereit. Die elektronische Motorsteuerung steuert die Leistung des Motors entsprechend der Eingaben von diesen Sensoren. Der Motorsteuerung wird auf diese Weise eine Information über den Betriebszustand der jeweiligen Einrichtungen zugeführt, und wenn die Vortriebseinrichtung abgeschaltet ist, der Mähdrescher also nicht zu fahren ist, wird durch die Motorsteuerung die maximale Motorleistung um einen gewissen Betrag reduziert. Alternativ oder zusätzlich wird die Motorleistung vermindert, wenn die Verarbeitungseinrichtung für das Erntegut abgeschaltet ist. Die Motorsteuerung kann eine reine Steuerung (Einstellung) des Motors durchführen, oder auch eine Regelung sein, d.h. Signale, die Ausgangsparametern des Motors entsprechen, können zur Steuerung zurückgeführt werden.

Als Vorteil ist insbesondere anzusehen, daß bei dem erfindungsgemäßen Mähdrescher eine Überlastung von Kraftübertragungselementen durch überschüssige Motorleistung, die bei Abschaltung einer angetriebenen Einrichtung frei wird, nicht mehr zu befürchten ist, so daß diese Kraftübertragungselemente nicht mehr überzudimensionieren sind, um dieser erhöhten Belastung standhalten zu können. Außerdem wird durch die Begrenzung der maximalen Motorleistung Energie und somit Kraftstoff gespart und die Belastung der Umwelt reduziert.

In der Regel weist ein Mähdrescher mehrere verschiedene Verarbeitungseinrichtungen für geerntetes Gut auf, wie z.B. eine Ernteeinrichtung, eine Trenneinrichtung oder einen Strohhäcksler. Diese Einrichtungen können separat ein- und ausschaltbar sein. In diesem Fall wird vorgeschlagen, daß die Motorsteuerung die maximale Ausgangsleistung in Abhängigkeit davon reduziert, welche der Verarbeitungseinrichtungen abgeschaltet sind. Die Leistungsverminderung kann im einfachsten Fall von der Anzahl der abgeschalteten Verarbeitungseinrichtungen abhängen, oder in aufwendigeren Ausführungsformen kann der Betrag, um den die maximale Ausgangsleistung des Motors vermindert wird, auch von der Art der abgeschalteten Verarbeitungseinrichtung(en) (en) abhängen.

Der Betrag, um den die maximale Ausgangsleistung des Motors reduziert wird, entspricht vorzugsweise der Leistung der abgeschalteten Verarbeitungseinrichtung, insbesondere einer Durchschnitts- oder Maximalleistung.

Analog kann bei abgeschalteter Vortriebseinrichtung die maximale Ausgangsleistung des Motors um einen Betrag, der der Leistung der Vortriebseinrichtung entspricht, reduziert werden. Auch in diesem Fall kann der Betrag einer Durchschnitts- oder Maximalleistung der Vortriebseinrichtung entsprechen.

Wie bereits beschrieben, ist die Motorsteuerung mit einer Information über den Betriebszustand der Vortriebseinrichtung und/oder der Verarbeitungseinrichtung (oder Verarbeitungseinrichtungen) zu beaufschlagen, d.h. mit einem Signal, das eine Information darüber enthält, ob die jeweilige Einrichtung einoder ausgeschaltet ist. Es wäre denkbar, spezielle Sensoren zu verwenden, die den Betriebszustand der Einrichtungen direkt untersuchen, also beispielsweise Rotationssensoren für einen Strohhäcksler oder einen Vortrieb. Diese Lösung hätte den Vorteil, daß der jeweilige Zustand stets exakt erfaßt wird (und würde beispielsweise berücksichtigen, daß der Leistungsbedarf bei einem gerissenen Antriebsriemen der Drescheinrichtung vermindert ist), ist aber durch die benötigten Sensoren andererseits relativ aufwendig. Es ist daher vorgeschlagen, die Motorsteuerung mit den Schaltern für die jeweiligen Einrichtungen zu verbinden, die in der Regel in der Bedienerkabine des Mähdreschers angeordnet sind.

Im konkreten kann ein Sensor mit der elektronischen Motorsteuerung in Verbindung stehen und detektieren, ob der Strohhäcksler betrieben wird. Ein zweiter Sensor kann ebenfalls mit der elektronischen Motorsteuerung in Verbindung stehen und detektieren, ob das Vortriebssystem betrieben wird. Ein dritter und vierter Sensor kann ebenfalls mit der elektronischen Motorsteuerung in Verbindung stehen und detektieren, ob die Ernteausrüstung im Betrieb ist, bzw. ob die Trenneinrichtung in Betrieb ist. Diese Sensoren umfassen vorzugsweise die in der Bedienerkabine des Mähdreschers angeordneten vier Ein-/Ausschalter, die verwendet werden, um diese Erntegutverarbeitungseinrichtungen zu steuern.

Der Mähdrescher gemäß der vorliegenden Erfindung ist in der Regel mit einem internen Verbrennungsmotor zum Antrieb der unterschiedlichen Einrichtungen des Mähdreschers ausgestattet, insbesondere einem Dieselmotor.

Anzumerken ist, daß die Erfindung nicht nur für Mähdrescher, sondern auch für beliebige andere landwirtschaftliche Fahrzeuge und Landbearbeitungsmaschinen, wie Feldhäcksler oder Traktoren mit Anbaugeräten anwendbar ist.

In den Zeichnungen ist ein nachfolgend näher beschriebenes Ausführungsbeispiel der Erfindung dargestellt. Es zeigt:
- Fig. 1: eine schematische Seitenansicht eines Mähdreschers;

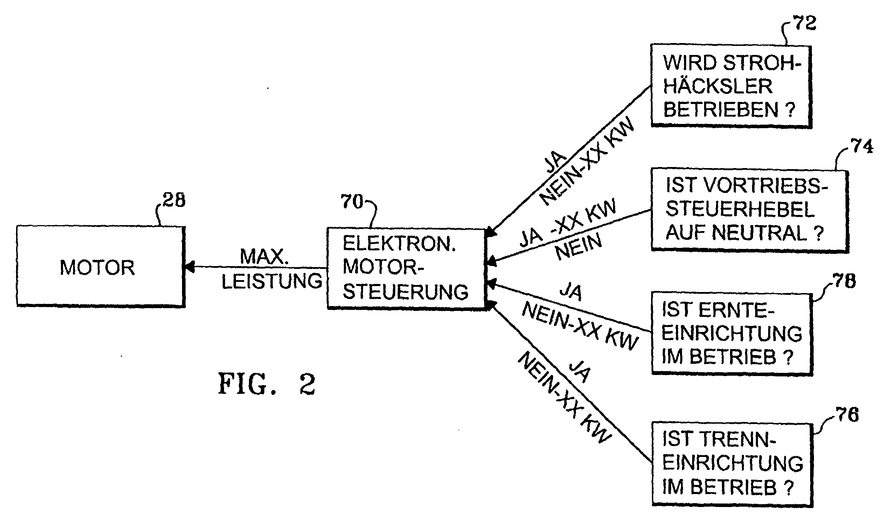

- Fig. 2: ein elektrisches Schaltungsdiagramm eines erfindungsgemäßen Mähdreschers; und
- Fig. 3: ein Balkendiagramm der Leistungsanforderungen der unterschiedlichen Einrichtungen.

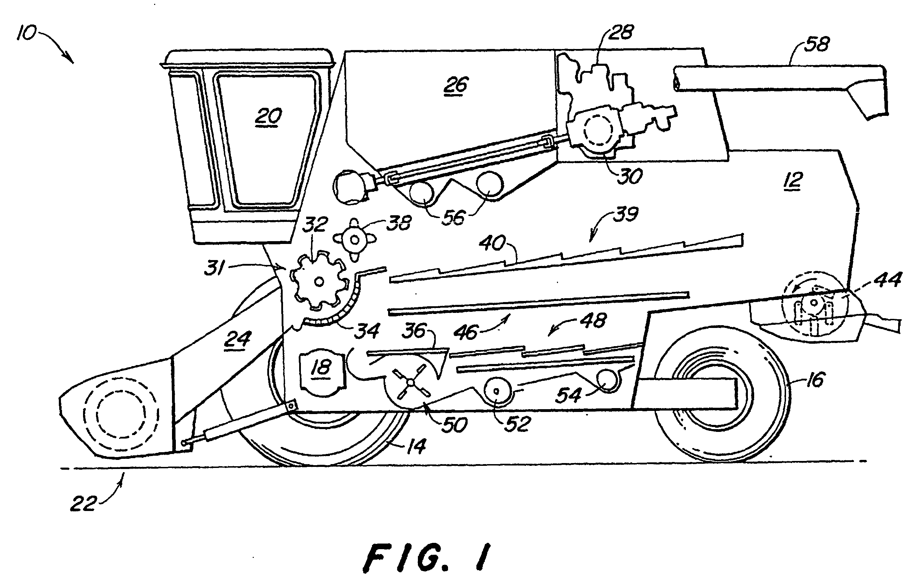

Figur 1 zeigt einen landwirtschaftlichen Mähdrescher 10 mit einem Fahrgestell 12 und mit dem Erdboden im Eingriff befindlichen Rädern 14 und 16. Die vorderen, mit dem Erdboden im Eingriff befindlichen Räder 14 werden durch einen hydrostatischen Motor 18, der zwischen den Rädern 14 angeordnet ist, angetrieben. Die Räder 14 und der hydrostatische Motor 18 sind Bestandteile der Vortriebseinrichtung des Mähdreschers 10. Ein in einer Bedienerkabine 20 sitzender Bediener steuert den Betrieb des Mähdreschers 10. Ein Erntevorsatz 22 erstreckt sich vom Fahrgestell 12 des Mähdreschers 10 nach vorn und wird zum Ernten von Gut von einem Feld verwendet. Nach dem Ernten wird das Gut durch einen Schrägförderer 24 in den Mähdrescher 10 geleitet.

Ein Korntank 26 ist hinter der Bedienerkabine 20 an der Oberseite des Mähdreschers 10 angeordnet. Hinter dem Korntank 26 ist ein transversal eingebauter Motor 28 mit innerer Verbrennung angeordnet, der der Primärantrieb des Mähdreschers 10 ist und die Vortriebseinrichtung, die Ernteeinrichtung und die Dresch- und Trennungseinrichtungen antreibt. Der Motor 28 mit interner Verbrennung ist mit einer Antriebseinrichtung 30 zum Antrieb der verschiedenen Arbeitseinrichtungen ausgestattet. Eine bessere Beschreibung der Antriebseinheit 30 ist in der US-A-4 843 803 enthalten, die dem Anmelder der vorliegenden Anmeldung überschrieben wurde, und die durch Verweis hierin aufgenommen wird.

Zwischen den Seitenblechen des Mähdreschers 10, die zum Fahrgestell 12 des Mähdreschers 10 gehören, sind die Dreschund Trenneinrichtungen angeordnet. Die Dresch- und Trenneinrichtungen trennen das Korn von Stroh und Spreu des geernteten Gutes. Der Schrägförderer 24 leitet das geerntete Korn zu einer Drescheinrichtung 31, die eine quer angeordnete Dreschtrommel 32, einen quer angeordneten Dreschkorb 34 und eine rotierende Wendetrommel 38 umfaßt. Während das Gut zwischen der Dreschtrommel 32 und dem Dreschkorb 34 hindurchgeführt wird, fallen Körner und Spreu durch den Dreschkorb 34 auf einen Vorbereitungsboden 36 und das verbleibende Gut wird zur Wendetrommel 38 weitergeleitet.

Nach dem Dreschen wird das Stroh aus dem Gut zu einer Trenneinrichtung 39 weitergeleitet. Die Hauptelemente der Trenneinrichtung 39 sind Strohschüttler 40, die das Stroh zur Rückseite des Mähdreschers 10 leiten, wo es von einem Strohhäcksler 44 aufgenommen wird. Der Strohhäcksler 44 häckselt das verbleibende Gut in kleinere Komponenten, bevor es auf das Feld zurück verbracht wird. Korn und Spreu, die durch die Strohschüttler 40 hindurch fallen, fallen auf einen oszillierenden, geneigten Rücklaufboden 46, der das Korn und die Spreu zum Vorbereitungsboden 36 führt. Das Korn und die Spreu werden vom Vorbereitungsboden 36 durch (nicht gezeigte) oberhalb des Vorbereitungsbodens 36 liegende Schneckenförderer einer Siebeinrichtung 48 zugeführt, die verwendet wird, um die Spreu vom Korn zu trennen.

Das Korn und die Spreu, die auf das Obersieb und das Untersieb der Siebeinrichtung 48 fallen, treffen auf einen Luftstrom aus einem Gebläse 50, der die leichtere Spreu aus der Rückseite des Mähdreschers 10 hinausbläst, während die schwereren Körner durch die Siebeinrichtung 48 fallen und in einen sauberes Korn aufnehmenden Schneckenförderer 52 gelangen. Der Schneckenförderer 52 leitet das saubere Korn zu einem (nicht gezeigten) Elevator für sauberes Korn, der nach und nach das Korn in den Korntank 26 leitet. Überkehr, d.h. ungedroschene Ähren des Korns, fällt in einen Überkehrschneckenförderer 54, der die ungedroschenen Ähren zurück zur Dreschtrommel 32 und zum Dreschkorb 34 führt. Wenn der Korntank 26 zu entladen ist, leiten transversale Entladeschneckenförderer 56 das Korn zur Seite des Korntanks 26, wo es in Kontakt mit einem (nicht gezeigten) vertikalen Entladeschneckenförderer kommt, der das saubere Korn durch ein Entleerrohr 58 leitet.

Wie oben diskutiert, werden die verschiedenen Verarbeitungseinrichtungen für das Gut durch einen Motor 28 mit innerer Verbrennung mit Leistung versorgt. Dieser Motor 28 ist elektronisch mit einer elektronischen Motorsteuerung 70 verbunden. Die elektronische Motorsteuerung 70 kommuniziert wiederum mit vier Gutverarbeitungssensoren. Diese Sensoren sind Ein-/Ausschalter, die detektieren, ob die jeweilige Gutverarbeitungseinrichtung eingeschaltet ist. Alle diese Schalter sind in der Bedienerkabine 20 angeordnet.

Der erste Sensor/Schalter ist der Strohhäcksler-Ein-/Ausschalter 72. Dieser Schalter wird verwendet, um den Strohhäcksler 44 ein und aus zu schalten. Der erste Sensor/Schalter steht durch geeignete Kabel in elektrischer Verbindung mit der elektronischen Motorsteuerung. Der zweite Sensor/Schalter ist der Vortriebseinrichtungs-Ein-/Ausschalter 74. Dieser Sensor/Schalter wird verwendet, um zu detektieren, ob der Vortriebssteuerungshandhebel in seiner neutralen Position ist. Er detektiert, ob der Mähdrescher 10 vorwärts oder rückwärts angetrieben wird. Der dritte Sensor/Schalter ist der Trenneinrichtungs-Ein-/Ausschalter 76. Dieser Schalter wird verwendet, um die Trenneinrichtung 39 zu betreiben. Der vierte Sensor/Schalter ist der Ernteeinrichtungs-Ein-/Ausschalter 78. Dieser Sensor/Schalter wird verwendet, um den Erntevorsatz 22, der an der Vorderseite des Mähdreschers 10 angeordnet ist, zu betreiben.

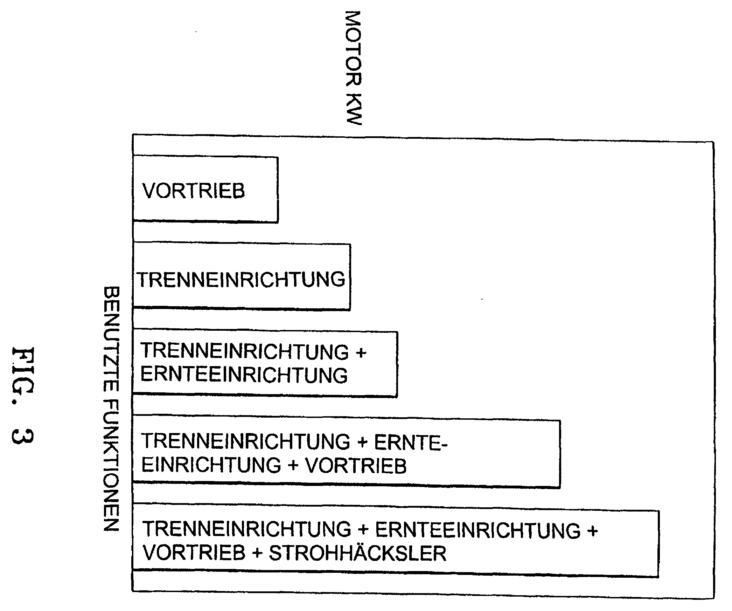

Wie im Balkendiagramm der Figur 3 dargestellt, erfordern unterschiedliche Kombinationen betriebener Verarbeitungseinrichtungen für das Gut unterschiedliche Motorausgangsleistungen. Daher reduziert, d.h. drosselt, die elektronische Motorsteuerung die Ausgangsleistung des Motors um einen bestimmten Betrag, wenn sie detektiert, daß der Strohhäcksler 44 nicht betrieben wird. Die elektronische Motorsteuerung 70 detektiert diese Bedingung durch die offene oder geschlossene Position des Strohhäcksler-Ein-/Ausschalters 72. In ähnlicher Weise wird die Motorleistung zum Vortrieb weder in Vorwärtsnoch Rückwärtsrichtung benötigt, wenn der Vortriebssteuerungshandhebel in seiner neutralen Position ist. Daher wird abhängig von der offenen oder geschlossenen Position des Vortriebseinrichtungs-Ein-/Ausschalters 74 die Ausgangsleistung des Motors 28 um einen bestimmten, zum Vortrieb des Mähdreschers 10 nötigen Betrag reduziert. Eine ähnliche Situation besteht auch für die beiden anderen Schalter, der Trenneinrichtungs-Ein-/Ausschalter 76 und der Ernteeinrichtungs-Ein-/Ausschalter 78.

## Patentansprüche

1. Mähdrescher (10), mit einem Motor (28), einer an den Motor (28) angeschlossenen Motorsteuerung (70) zur Steuerung der Leistung des Motors (28), einer Vortriebseinrichtung, sowie wenigstens einer Verarbeitungseinrichtung für Erntegut, wobei die Vortriebseinrichtung und die Verarbeitungseinrichtung durch den Motor (28) antreibbar und separat abschaltbar sind, **dadurch gekennzeichnet, daß** die Motorsteuerung (70) eingerichtet ist, die maximale Leistung des Motors (28) zu reduzieren, wenn die Vortriebseinrichtung und/oder die Verarbeitungseinrichtung abgeschaltet ist.

2. Mähdrescher nach Anspruch 1, **gekennzeichnet durch** mehrere **durch** den Motor (28) antreibbare Verarbeitungseinrichtungen für geerntetes Gut, die separat abschaltbar sind, wobei die Motorsteuerung (70) die maximale Leistung des Motors (28) in Abhängigkeit davon reduziert, welche Verarbeitungseinrichtung abgeschaltet ist.

3. Mähdrescher nach Anspruch 1 oder 2, **dadurch gekennzeichnet, daß** die Motorsteuerung (70) bei einer abgeschalteten Verarbeitungseinrichtung die maximale Leistung des Motors (28) um einen bestimmten Betrag reduziert, vorzugsweise um einen Betrag, der dem Leistungsbedarf der abgeschalteten Verarbeitungseinrichtung entspricht.

4. Mähdrescher nach einem der vorhergehenden Ansprüche, **dadurch gekennzeichnet, daß** die Motorsteuerung (70) bei abgeschalteter Vortriebseinrichtung die maximale Leistung des Motors (28) um einen bestimmten Betrag reduziert, vorzugsweise um einen Betrag, der dem Leistungsbedarf der Vortriebseinrichtung entspricht.

5. Mähdrescher nach einem der vorhergehenden Ansprüche, **dadurch gekennzeichnet, daß** die Verarbeitungseinrichtung eine Ernteeinrichtung (22) und/oder eine Trenneinrichtung (39) und/oder ein Strohhäcksler (44) ist.

6. Mähdrescher nach einem der vorhergehenden Ansprüche, **dadurch gekennzeichnet, daß** die Motorsteuerung (70) mit einem Schalter (74) verbunden ist, mit dem die Vortriebseinrichtung ein- und ausschaltbar ist.

7. Mähdrescher nach einem der vorhergehenden Ansprüche, **dadurch gekennzeichnet, daß** die Motorsteuerung (70) mit zumindest einem Schalter (72,76,78) verbunden ist, mit dem eine Verarbeitungseinrichtung ein- und ausschaltbar ist.

8. Mähdrescher nach einem der vorhergehenden Ansprüche, **dadurch gekennzeichnet, daß** der Motor (28) ein Verbrennungsmotor ist, wie beispielsweise ein Dieselmotor.

## Claims

1. A combine harvester (10) with an engine (28), an engine controller (70) connected to the engine (28) for controlling the power of the engine (28), a propulsion assembly and at least one processing device for harvested material, wherein the propulsion assembly and the processing device can be driven by the engine (28) and can be separately turned off, **characterized in that** the engine controller (70) is arranged to reduce the maximum power of the engine (28) when the propulsion assembly and/or the processing device is turned off.

2. A combine harvester according to claim 1, **characterized by** a plurality of processing devices for harvested material which can be driven by the engine (28) and can be turned off separately, wherein the engine controller (70) reduces the maximum power of the engine (28) in dependence upon which processing device is switched off.

3. A combine harvester according to claim 1 or 2, **characterized in that** the engine controller (70) reduces the maximum power of the engine (28) in the case of a switched off processing device by a specific amount, preferably by an amount which corresponds to the power requirement of the switched off processing device.

4. A combine harvester according to any of the preceding claims, **characterized in that** the engine controller (70) reduces the maximum power of the engine (28) in the case of the propulsion assembly being switched off by a specific amount, preferably by an amount which corresponds to the power requirement of the propulsion assembly.

5. A combine harvester according to any of the preceding claims, **characterized in that** the processing device is a harvesting device (22) and/or a separator device (39) and/or a straw chopper (44).

6. A combine harvester according to any of the preceding claims, **characterized in that** the engine controller (70) is connected to a switch (74) with which the propulsion assembly can be switched on and off.

7. A combine harvester according to any of the preceding claims, **characterized in that** the engine controller (70) is connected to at least one switch (72, 76, 78) with which a processing device can switched on and off.

8. A combine harvester according to any of the preceding claims, **characterized in that** the engine (28) is an internal combustion engine, such as a Diesel engine for example.

## Revendications

1. Moissonneuse-batteuse (10) comportant un moteur (28), une unité (70) de commande du moteur raccordée au moteur (28) et servant à commander la puissance du moteur (28), un dispositif d'entraînement en déplacement, ainsi qu'au moins un dispositif de traitement pour la matière récoltée, le dispositif d'entraînement en déplacement et le dispositif de traitement pouvant être entraînés par le moteur (28) et être débranchés séparément, **caractérisée en ce que** l'unité (70) de commande du moteur est agencée de manière à réduire la puissance maximale du moteur (28) lorsque le dispositif d'entraînement en déplacement et/ou le dispositif de traitement sont débranchés.

2. Moissonneuse-batteuse selon la revendication 1, **caractérisée par** plusieurs dispositifs de traitement de la matière récoltée, qui peuvent être entraînés par le moteur (28) et peuvent être débranchés séparément, l'unité (70) de commande du moteur réduisant la puissance maximale du moteur (28) en fonction de celui des dispositifs de traitement qui est débranché.

3. Moissonneuse-batteuse selon la revendication 1 ou 2, **caractérisée en ce que** dans le cas où un dispositif de traitement est débranché, l'unité (70) de commande du moteur réduit la puissance maximale du moteur (28) d'une valeur déterminée, de préférence d'une valeur qui correspond au besoin en puissance du dispositif de traitement débranché.

4. Moissonneuse-batteuse selon l'une des revendications précédentes, **caractérisée en ce que** dans le cas où le dispositif d'entraînement en déplacement est débranché, l'unité (70) de commande du moteur réduit la puissance maximale du moteur (28) d'une valeur déterminée, de préférence d'une valeur qui correspond au besoin en puissance du dispositif d'entraînement en déplacement.

5. Moissonneuse-batteuse selon l'une des revendications précédentes, **caractérisée en ce que** le dispositif de traitement est un dispositif de moissonnage (22) et/ou un dispositif de séparation (39) et/ou un hache-pailles (44).

6. Moissonneuse-batteuse selon l'une des revendications précédentes, **caractérisée en ce que** l'unité (70) de commande du moteur est reliée à un interrupteur (74) au moyen duquel le dispositif d'entraînement en déplacement peut être branché et débranché.

7. Moissonneuse-batteuse selon l'une des revendications précédentes, **caractérisée en ce que** l'unité (70) de commande du moteur est reliée à au moins un interrupteur (72, 76, 78) au moyen duquel un dispositif de traitement peut être branché et débranché.

8. Moissonneuse-batteuse selon l'une des revendications précédentes, **caractérisée en ce que** le moteur (28) est un moteur à combustion interne, comme par exemple un moteur diesel.
